# EUROPEAN PATENT APPLICATION

(11) **EP 3 971 250 A1**
(43) Date of publication of application: **23.03.2022**
(21) Application number: 20806072.3
(22) Date of filing: 11.03.2020
(51) Int. Cl.: C09D 11/18, B43K 1/08, B43K 7/02

(54) **WATER-BASED BALLPOINT PEN**

(30) Priority: 14.05.2019 JP 2019091401
(71) Applicant: Mitsubishi Pencil Company, Limited, Tokyo 140-8537 (JP)
(72) Inventor: OGURA, Kousuke, Tokyo 140-8537 (JP); HOMMA, Yuichiro, Tokyo 140-8537 (JP)
(74) Representative: Vossius & Partner Patentanwälte Rechtsanwälte mbB
(86) International application number: PCT/JP2020/010542
(87) International publication number: WO 2020/230431

(57) **Abstract**

A water-based ballpoint pen 10 contains an aqueous ink composition in which resin particles having an average particle diameter of at least 0.3 µm are blended. The water-based ballpoint pen 10 is provided with a ballpoint pen tip 20 including a writing ball 30. The writing ball 30 is formed from a mixture that includes a hard phase component comprising tungsten carbide, a binder phase component comprising cobalt and nickel, and chromium.

## Description

### TECHNICAL FIELD

The present invention relates to a water-based ballpoint pen provided with a writing ball that includes a hard phase component and a binder phase component.

### BACKGROUND ART

Cemented alloys, ceramics and the like are widely known as materials configuring the balls of ballpoint pens, such as in Japanese Utility Model Application Laid-Open (JP-U) No. S52-106235 and Japanese Patent Application Laid-Open (JP-A) Nos. 2002-19366 and 2015-51571. Improvements in ink adhesion and the writing sensation of balls fabricated of cemented alloys have been considered in Japanese Patent Application Publication (JP-B) No. S50-31049 and JP-A No. 2002-19366.

Moreover, JP-A No. 2003-155435 discloses an ink of a water-based ballpoint pen including colored resin particles. In particular, JP-A No. 2017-214540 discloses a use of a microsphere coloring agent.

Furthermore, JP-A No. 2006-142511 discloses an improvement of writing characteristics with an ink that uses a thermochromic pigment and a ball containing cobalt and nickel.

### SUMMARY OF INVENTION

### TECHNICAL PROBLEM

When a water-based ballpoint pen using an ink composition containing relatively large-diameter resin particles, with an average particle diameter of 0.3 µm or more, is left in a state in which the ballpoint pen tip is exposed to outside air, it is often the case that the ink does not easily emerge from the tip when writing is resumed. It has been observed that this is because moisture contained in ink adhered to the tip end of the ballpoint pen tip evaporates, as a result of which the resin particles in the ink lose consistent dispersibility, and loose agglomerations of the resin particles are formed. This effect is more likely to occur when the average particle diameter of the resin particles in the ink is relatively large and when there is a high proportion of the resin particles in the composition.

Attempts have previously been made to solve this problem in initial writing performance by adjusting the ink composition, such as in JP-A No. 2016-132749. However, attempts have not yet been made to improve initial the writing performance without altering the ink composition.

In consideration of the problem described above, an object of aspects of the present disclosure is to improve the initial writing performance of a water-based ballpoint pen after the water-based ballpoint pen has been left in a state in which a ballpoint pen tip is exposed to outside air, the water-based ballpoint pen using an ink composition containing relatively large-diameter resin particles with an average particle diameter of 0.3 µm or more, without altering the composition of the ink.

### SOLUTION TO PROBLEM

In order to solve the problem described above, a first aspect of the present disclosure is a water-based ballpoint pen containing an aqueous ink composition blended with resin particles having an average particle diameter of 0.3 µm or more, the water-based ballpoint pen comprising a ballpoint pen tip having a writing ball formed from a mixture including: a hard phase component including tungsten carbide; a binder phase component including cobalt and nickel; and chromium.

An upper limit of the average particle diameter of the resin particles is not particularly limited, but is preferably less than 5 µm so as not to impair the flowability of the ink and the dispersibility of the resin particles.

In a water-based ballpoint pen according to a second aspect of the present disclosure, in addition to the characteristics of the first aspect described above, the aqueous ink composition contains from 5 to 30 mass% of the resin particles.

In a water-based ballpoint pen according to a third aspect of the present disclosure, in addition to the characteristics of the first aspect or second aspect described above, the resin particles include a coloring agent.

### ADVANTAGEOUS EFFECTS OF INVENTION

According to the aspects of the present disclosure with the configurations described above, in a water-based ballpoint pen that uses an ink composition containing relatively large-diameter resin particles with an average particle diameter of at least 0.3 µm, the initial writing performance of the water-based ballpoint pen, after the water-based ballpoint pen has been left in a state in which the ballpoint pen tip is exposed to outside air, is improved without the composition of the ink being altered.

### BRIEF DESCRIPTION OF DRAWINGS

Fig. 1 is a side view of a water-based ballpoint pen according to an exemplary embodiment of the present disclosure.
Fig. 2 is a sectional view of a refill to be used in the water-based ballpoint pen of Fig. 1.
Fig. 3 is a magnified sectional view showing a tip end vicinity of a ballpoint pen tip used in the refill of Fig. 2.

### DETAILED DESCRIPTION

An exemplary embodiment of the present disclosure is described below with reference to the drawings. Note that reference symbols marked on the drawings that are the same in plural drawings have the same technical meaning even if not mentioned in the descriptions of the drawings below. An upper side of each drawing is referred to as a tip end side and a lower side of each drawing is referred to as a rear end side.

### (1) Appearance

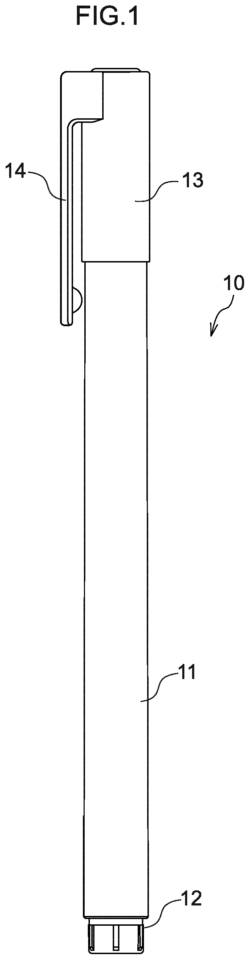

Fig. 1 is a side view of a water-based ballpoint pen 10 according to a first exemplary embodiment. The water-based ballpoint pen 10 has an appearance in which a cap 13 provided with a clip 14 is mounted at a tip end of a shaft tube 11, at a rear end of which is provided with a tail plug 12.

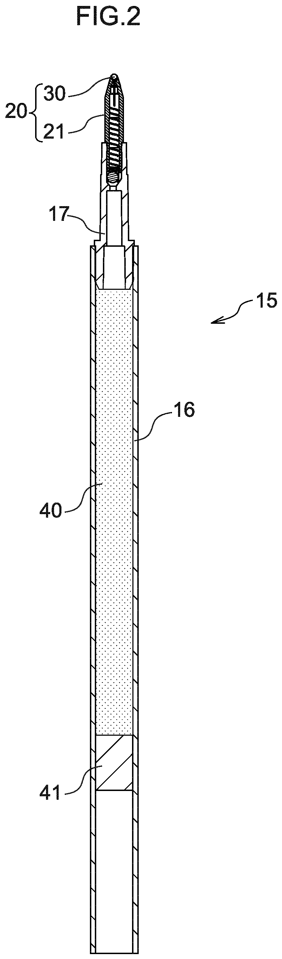

Fig. 2 is a sectional view of a refill 15 to be loaded inside the shaft tube 11 of the water-based ballpoint pen 10 of Fig. 1. The refill 15 has a structure in which a ballpoint pen tip 20 is mounted at a tip end of an elongated cylindrical ink-containing tube 16 via a joint 17. The ink-containing tube 16 contains an aqueous ink composition 40. The ballpoint pen tip 20 has a structure in which a writing ball 30 is mounted at a furthest tip end of a holder 21. The tip end of the holder 21 is formed in a tapering shape. A grease-like follower 41 is charged to a rear end of the aqueous ink composition 40 in order to prevent the aqueous ink composition 40 flowing from the rear end of the refill 15. As the aqueous ink composition 40 is consumed by writing, the follower 41 follows the aqueous ink composition 40 in a direction toward the tip end.

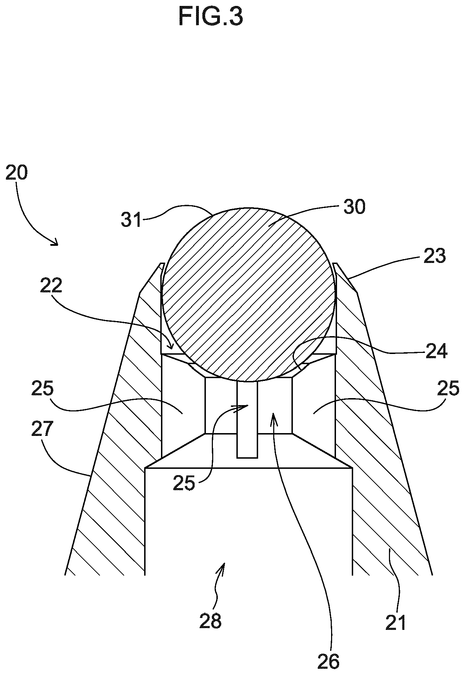

Fig. 3 is a magnified sectional view of a vicinity of the tip end of the ballpoint pen tip 20. The ballpoint pen tip 20 is configured of the holder 21 and the spherical writing ball 30. The holder 21 includes a taper portion 27 formed such that a tip end of a cylindrical barrel portion decreases in diameter in a taper. The writing ball 30 is retained inside the holder 21. The holder 21 is configured of a back hole 28, a ball house 22, a guide hole 26 and a swaged portion 23. The back hole 28 pierces from a rear end of the ballpoint pen tip 20. The ball house 22 is cut into an inner periphery of a tip end vicinity of the holder 21 in a widening shape. The guide hole 26 penetrates between the ball house 22 and the back hole 28. The swaged portion 23 is a part between a tip end of an inner periphery face of the ball house 22 and the tip end of the taper portion 27, and is swaged by plastic deformation in directions toward a center of the writing ball 30. The ballpoint pen tip 20 further includes a ball seat 24 and ink channels 25. The ball seat 24 is provided at a bottom portion of the ball house 22 and is formed around the periphery of the guide hole 26. The ink channels 25 are equidistantly disposed at four locations around the ball seat 24 so as to communicate between the ball seat 24 and the guide hole 26. Widths and the number of the ink channels 25 may be altered in accordance with viscosity and the like of the aqueous ink composition 40.

When the holder 21 is assembled, the writing ball 30 is inserted into the ball house 22 from the tip side thereof. Then, by the upper portion of the writing ball 30 being pressed in the direction toward the rear end, the ball seat 24 is deformed in accordance with an exterior shape of the writing ball 30. Thereafter, a swaging process using taper-shaped rollers is applied to the tip end of the taper portion 27, providing the swaged portion 23. Thus, the holder 21 is formed.

The holder 21 is formed of stainless steel with a Vickers hardness of around 200 to 420. The holder 21 may be formed using an alternative metal such as nickel silver or brass or a resin or the like as the material thereof, with a desirable Vickers hardness (Hv) being from 170 to 450.

In the present exemplary embodiment, the holder 21 is formed by a process of cutting from a solid wire material. However, the process of cutting from a wire material is not limiting. For example, the holder 21 may be formed by plastic machining of a hollow pipe material.

### (2) The writing ball

The writing ball 30 according to the present exemplary embodiment is formed of a mixture including a hard phase component comprising tungsten carbide (WC), a binder phase component comprising cobalt (Co) and nickel (Ni), and also chromium (Cr). The metallic elements referred to herein may be used in their elemental forms or as compounds. The mixture may also include another metallic element such as, for example, molybdenum (Mo).

The hard phase component is preferably 80 mass % or more as a proportion of the whole of the writing ball 30.

Powder materials of the hard phase component, the binder phase components and chromium mentioned above and, if other components are to be included, powder materials of the other components are pulverized and mixed. This mixture is formed into a substantially spherical shape, and then sintered and formed into a spherical body. The spherical body obtained thus far is rolled together with diamond powder between two grindstones that are retained at a certain spacing. Thus, a ball surface 31 is finished to a mirror surface and the writing ball 30 is formed. The Vickers hardness (Hv) of the ball surface 31 is from 1,600 to 2,000.

### (3) The aqueous ink composition 40

Resin particles having an average particle diameter of at least 0.3 µm are blended in the aqueous ink composition 40 according to the present exemplary embodiment. Microscopic spherical bodies (microspheres or microcapsules) containing a dye or pigment as a coloring agent may be used as the resin particles. A hollow resin may also be used as the resin particles. A preferable content amount of the resin particles is from 5 to 30 mass % of the whole of the ink composition. An upper limit of the average particle diameter of the resin particles is not particularly limited as long as flowability of the ink and dispersibility of the resin particles are not impaired. However, the average particle diameter is preferably 5 µm or less.

### EXAMPLES

### (1) Writing balls

Writing balls were fabricated with following compositions.

### (1-1) Ball 1

Ball 1 was a writing ball fabricated by the method described above from a mixture with a following composition.
WC (hard phase component): 91 mass %
Co (binder phase component): 5 mass %
Ni (binder phase component): 2 mass %
Cr₃C₂: 2 mass %

### (1-2) Ball 2

Ball 2 was a writing ball fabricated by the method described above from a mixture with a following composition.
WC (hard phase component): 89 mass %
Co (binder phase component): 3 mass %
Ni (binder phase component): 5 mass %
Cr₃C₂: 3 mass %

### (1-3) Ball 3

Ball 3 was a writing ball fabricated by the method described above from a mixture with a following composition.
WC (hard phase component): 86 mass %
Co (binder phase component): 10 mass %
Ni (binder phase component): 1 mass %
Cr₃C₂: 3 mass %

### (1-4) Ball 4

Ball 4 was a writing ball fabricated by the method described above from a mixture with a following composition.
WC (hard phase component): 85 mass %
Co (binder phase component): 10 mass %
Cr₃C₂: 5 mass %

### (1-5) Ball 5

Ball 5 was a writing ball fabricated by the method described above from a mixture with a following composition.
WC (hard phase component): 91 mass %
Ni (binder phase component): 6 mass %
Cr₃C₂: 3 mass %

### (2) Inks

Inks 1 to 3 were prepared as follows.

### (2-1) Ink 1

### (2-1-1) Oil phase solution

While 12.5 mass parts of ethyl acetate serving as an organic solvent was heated at 60°C, 3.5 mass parts of an oil-soluble black dye serving as a water-insoluble dye (OIL BLACK 860, from Orient Chemical Industries Co., Ltd.) was added to the ethyl acetate and thoroughly dissolved. Then, 8 mass parts of a modified isocyanurate of hexamethylene diisocyanate serving as a prepolymer (TLA-100, from Asahi Kasei Chemicals Corporation) was added. Thus, an oil phase solution was prepared.

### (2-1-2) Water phase solution

While 200 mass parts of distilled water was heated at 60°C, 15 mass parts of polyvinyl alcohol serving as a dispersion agent (PVA-205, from Kuraray Co., Ltd.) was dissolved therein. Thus, a water phase solution was prepared.

### (2-1-3) Emulsion polymerization

The oil phase solution was added to the water phase solution heated to 60°C, and polymerization was completed by emulsion mixing in a homogenizer. Microspheres containing the coloring agent were recovered from the obtained dispersion by centrifugal processing. The average particle diameter was 1.5 µm. The average particle diameter was measured using a particle size analyzer (HRA9320-X100, from Nikkiso Co., Ltd.), taking a D₅₀ value calculated by reference to volume with a refractive index of 1.81 (the same applies to Ink 2 and Ink 3, which are described below).

### Then, an ink composition with following components was used for Ink 1.

The microspheres: 15 mass parts
Xanthan gum (thickening agent, KESLAN S, from Sansho Co., Ltd.): 0.18 mass parts
Phosphate ester (PLYSURF A219B, from DKS Co., Ltd.): 0.5 mass parts
Preservative (BIODEN 421, from Daiwa Chemical Industries Co., Ltd.): 0.2 mass parts
Benzotriazole (corrosion inhibitor): 0.3 mass parts
Aminomethylpropanol (pH adjuster): 0.1 mass parts
Propylene glycol (solvent): 15 mass parts
Deionized water: 68.72 mass parts

### (2-2) Ink 2

### (2-2-1) Thermochromic microcapsule dye

One mass part of ETAC (from Yamada Chemical Co., Ltd.) serving as a leuco dye, 2 mass parts of bisphenol A serving as a developing agent, and 24 mass parts of myristyl myristate serving as a thermochromism temperature adjuster were heated to 100°C and fused, providing a homogeneous composition.

The 27 mass parts of the obtained composition was heated uniformly at 100°C in a solution. As capsule wall agents, 10 mass parts of isocyanate and 10 mass parts of polyol were added to the heated solution and mixed by agitation. Then, 60 mass parts of a 12% aqueous solution of polyvinyl alcohol serving as a protective colloid was added and emulsified at 25°C, preparing a dispersion. Then, 5 mass parts of 5% polyamine was added and treated at 85°C for 45 minutes, providing core-shell type microcapsules containing the coloring agent. The average particle diameter was 2.1 µm.

An ink composition with following components was used for Ink 2.
The thermochromic microcapsule dye: 15 mass parts
Xanthan gum (thickening agent, KESLAN S, from Sansho Co., Ltd.): 0.3 mass parts
Phosphate ester (PLYSURF A219B, from DKS Co., Ltd.): 0.3 mass parts
Preservative (BIODEN 421, from Daiwa Chemical Industries Co., Ltd.): 0.2 mass parts
Benzotriazole (corrosion inhibitor): 0.3 mass parts
Triethanolamine (pH adjuster): 0.1 mass parts
Glycerol (solvent): 10 mass parts
Deionized water: 73.8 mass parts

### (2-3) Ink 3

An ink composition with following components was used for Ink 3.
Pigment (FUJI RED 2510, from Fuji Pigment Co., Ltd.): 8 mass parts
Pigment dispersion agent (JONCRYL 60, from BASF Japan Ltd.): 6 mass parts
Hollow resin particles (ROPAQUE OP-84J, from The Dow Chemical Company, solids 42.5%, average particle diameter 0.55 µm): 10 mass parts
Xanthan gum (thickening agent, KESLAN S, from Sansho Co., Ltd.): 0.3 mass parts
Phosphate ester (PLYSURF A219B, from DKS Co., Ltd.): 0.3 mass parts
Preservative (BIODEN 421, from Daiwa Chemical Industries Co., Ltd.): 0.2 mass parts
Benzotriazole (corrosion inhibitor): 0.3 mass parts
Triethanolamine (pH adjuster): 0.5 mass parts
Glycerol (solvent): 10 mass parts
Deionized water: 64.4 mass parts

### (3) Examples and Comparative Examples

The water-based ballpoint pens as illustrated in the exemplary embodiment were prepared using Ball 1 to Ball 5 and Ink 1 to Ink 3 described above.

### (3-1) Example 1

A water-based ballpoint pen according to Example 1 employed Ball 1 as the writing ball. Three refills were prepared containing, respectively, Ink 1 to Ink 3.

### (3-2) Example 2

A water-based ballpoint pen according to Example 2 employed Ball 2 as the writing ball. Three refills were prepared containing, respectively, Ink 1 to Ink 3.

### (3-3) Example 3

A water-based ballpoint pen according to Example 3 employed Ball 3 as the writing ball. Three refills were prepared containing, respectively, Ink 1 to Ink 3.

### (3-4) Comparative Example 1

A water-based ballpoint pen according to Comparative Example 1 employed Ball 4 as the writing ball. Three refills were prepared containing, respectively, Ink 1 to Ink 3.

### (3-5) Comparative Example 2

A water-based ballpoint pen according to Comparative Example 2 employed Ball 5 as the writing ball. Three refills were prepared containing, respectively, Ink 1 to Ink 3.

### (4) Evaluation method and results

The water-based ballpoint pens according to Examples 1 to 3 and Comparative Examples 1 and 2 described above were left in an uncapped state for 60 minutes in an environment with temperature 25°C and humidity 50%. Then, they wrote straight lines on ordinary photocopier paper and initial writing performances were evaluated by following evaluation standards.
A: No blurring was seen at all in the line from the start of writing.
B: Blurring of the line was observed from the start of writing.

The results according to these evaluation standards were as in Table 1 below.

**Table 1**

| Example/ Comparative Example | Ink | | |
|---|---|---|---|
| | Ink 1 | Ink 2 | Ink 3 |
| Example 1 | A | A | A |
| Example 2 | A | A | A |
| Example 3 | A | A | A |
| Comparative Example 1 | B | B | B |
| Comparative Example 2 | B | B | B |

The water-based ballpoint pens according to Examples 1 to 3 using, respectively, the writing balls of Ball 1 to Ball 3 were excellent in initial writing performance with no blurring of lines at the start of writing, whichever of Ink 1 to Ink 3 was used.

In contrast, with the water-based ballpoint pen according to Comparative Example 1 using Ball 4 that did not contain nickel, blurring of the line at the start of writing was seen whichever of Ink 1 to Ink 3 was used. With the water-based ballpoint pen according to Comparative Example 2 using Ball 5 that did not contain cobalt, blurring of the line at the start of writing was seen whichever of Ink 1 to Ink 3 was used.

As shown above, when both cobalt and nickel are blended as components of a writing ball in addition to tungsten carbide and chromium, initial writing performance may be improved regardless of types of resin particles.

### INDUSTRIAL APPLICABILITY

The present invention is applicable to ballpoint pens containing aqueous inks in which resin particles are blended.

## Claims

1. A water-based ballpoint pen containing an aqueous ink composition blended with resin particles having an average particle diameter of 0.3 µm or more, the water-based ballpoint pen comprising a ballpoint pen tip having a writing ball formed from a mixture including:
a hard phase component comprising tungsten carbide;
a binder phase component comprising cobalt and nickel; and
chromium.

2. The water-based ballpoint pen according to claim 1, wherein the aqueous ink composition contains from 5 to 30 mass% of the resin particles.

3. The water-based ballpoint pen according to claim 1 or claim 2, wherein the resin particles include a coloring agent.
